# EUROPEAN PATENT APPLICATION

(11) **EP 3 333 822 A1**
(43) Date of publication of application: **13.06.2018**
(21) Application number: 18150001.8
(22) Date of filing: 18.04.2012
(51) Int. Cl.: G08G 1/00, G08B 25/00

(54) **INDEPENDENT AND AUTOMATIC INCIDENT ALERT DEVICE, SYSTEM & METHOD**

(30) Priority: 18.04.2011 AU 2011901440
(62) Divisional of application: 12774251.8
(71) Applicant: Boyt, Adam Andrew, Crawley, Western Australia 6009 (AU); Gilbert, Martyn Wesley, Dalkeith, Western Australia 6009 (AU)
(72) Inventor: Boyt, Adam Andrew, Crawley, Western Australia 6009 (AU); Gilbert, Martyn Wesley, Dalkeith, Western Australia 6009 (AU)
(74) Representative: Stanley, David William

(57) **Abstract**

An independent and automatic alert device, system and method provides an alert transmission to a remote location in the event of an incident occurring to an object (such as a person or vehicle). Detection means detects at least one characteristic of an incident, such as speed, angle, vector, roll, yaw, heave, pitch, acceleration, deceleration, rate of deceleration (jerk), position, immersion, presence of one or more chemicals, radioactive materials or radiation, temperature, force or overall area of any impact to the object. Determination means identifies whether a detected incident requires an alert to be transmitted. Transmission means transmits an alert to the remote location based on the at least one characteristic of the incident.

## Description

### TECHNICAL FIELD

The present invention relates to a device, system and method for detecting an incident has occurred and providing an alert in the event of such an incident, such as a vehicle accident or personal injury incident.

### BACKGROUND

When an incident occurs that requires alerting third parties for some form of assistance, it is particularly useful that an alert is raised. The alert may be used to summon emergency services or other assistance to the incident and/or advise of location.

One example of such an alert is the use of an electronic positioning emergency radio beacon (EPERB) in marine emergency situations when a marine vessel or crew require rescuing. EPERB is nowadays a GPS based system. However, a person must physically set off the alert by causing the EPERB device to activate, such as by operating a switch on the device or putting it into water. Furthermore, an EPERB only sends out a radio signal identifying that the EPERB has bee actuated, and does not give a real time location or any information identifying the nature of the related incident. An EPERB device only transmits a beacon signal to identify that some form of emergency exists. If the particular EPERB is registered with authorities, the signal can be matched to the owner or a vessel, but no information is given as to the exact real time location or nature of the incident. Because an EPERB does not transmit exact coordinates of present location, wind, waves, tides and currents can cause the EPERB to drift, resulting in delay in locating the EPERB and therefore delays in rescuing or retrieving the person or people involved in the incident. Such delays can prove fatal.

E-call is another known form of alert. However, such alerts are not independent and automatic. They are known to be vehicle based and require vehicle systems to operate correctly i.e. are not autonomous. E-call also requires a mobile telephone connection.

In the situation where a vehicle is damaged, for example, in a road traffic accident, where there is the likelihood of one or more injured people, current incident alerts rely on the occupant(s) of the vehicle, other people involved in the incident or passers-by, calling for emergency services. Such a system often results in delay in calling for emergency services, especially if the injured person is alone or unable to use or reach a telephone, which can and does have catastrophic outcomes in terms of mortality rates or best outcomes for injured people.

Motor vehicles are known to carry global positioning system (GPS) technology that can send an alert to a remote centre or device if the vehicle is taken without authorisation e.g. an anti theft system giving an alert of a stolen vehicle; however, such alerts can give the location of the vehicle but do not give any indication as to what is happening or has happened with that vehicle, particularly in the event that the stolen vehicle is involved in an accident. Such alert systems are also not capable of operating fully independently of the vehicle/object to which they are attached. Nor are they always capable of autonomous activation.

It is in the light of such problems that the present invention has been developed. With the aforementioned in mind, it has been found desirable for the present invention to provide a means and method of automatically and independently sending an incident alert that provides an improved level of information regarding the nature of the incident. The present invention is applicable to incidents happening to objects, such as vehicles and other equipment, as well as to people.

### SUMMARY OF THE INVENTION

If a vehicle is damaged, requires assistance or is altered in an expected, predictable/predicted or pre-defined, or modifiable manner, or a person is injured, trapped or otherwise incapacitated or at risk in some way, the ability to transmit a notification of such an event, both in general and to appropriate reception places, may be of advantage both in recovery, rescue and retrieval. Transmission of situational data or information would alternatively or additionally be useful under such circumstances.

Alteration of the object in a may include crash damage to a vehicle or alteration that is expected to happen and the alert is given when such change occurs, or from personal injury to a person. Alteration of the object may be a change of conditions affecting the object, such as immersion or wetting of the object rather than physical damage. It is envisaged that the device or system will operate even with complete or substantial destruction of the object, such as a

With this in mind, an aspect of the present invention provides an independent automatic alert device to be mounted to an object, the device, in use, arranged to detect that an incident has occurred and to transmit an alert to a remote location to signal that the incident has occurred to the object, the device including incident detection means to detect at least one characteristic of the incident, determination means to identify whether a detected incident requires an alert to be transmitted, and transmission means to transmit an alert to the remote location based on the at least one characteristic of the incident.

Embodiments of the present invention may be enabled to modify detection and transmission methods based on detected resources, such as the availability (or lack of availability) of telecommunication systems within operational range. Furthermore, embodiments of the present invention may be enabled to assess effectiveness of transmission and modify the transmission method and/or signal accordingly.

One or more forms of the present invention are capable of operating automatically and independently of the associated object. For example, one or more forms of the present invention may detect independently and automatically of the object that an incident has occurred to the object, thereby not requiring detection by a person or remote device, and may automatically transmit an alert independent of the associated object, thereby not requiring a person or remote device to activate the alert.

One or more forms of the present invention may provide a method or device including the ability to modify detection and transmission methods based on detected resources. For example, if the device detects that mobile telephone signal reception is non-existent or too weak a signal but a wireless network connection is available, the device will select the wireless connection, such as a wireless connection to the Internet. Alternatively, if the mobile telephone network signal is sufficiently strong, the device may preferentially select that as a medium to transmit the alert. Transmission of an alert may preferably be automatic.

The alert may be a general alert that an incident has occurred to the object. Alternatively or in addition, the alert may include specific information, such as location of the incident in space and time (where and when the incident occurred) and preferably altitude and/or depth (positive or negative height with respect to sea level), characteristics of the incident including but not limited to speed, angle, vector, roll, yaw, heave and pitch, acceleration, deceleration, rate of deceleration (jerk), position, force and/or overall area of any impact to the object, affecting the object both during and/or after the incident, such as the object coming to rest at an unexpected or odd angle or location. Other characteristics of the incident may include detection of immersion of the object, fire/smoke/heat detection, surrounding (ambient) temperature and/or temperature within a vehicle. In the case of the system or device being used in a marine or cold climate application (such as in an avalanche), the system could transmit external temperature, which can be critical in determining life expectancy and when hypothermia is likely to set in - i.e. the "window of opportunity". Such characteristics can give an indication of the likely damage to the object and also preferably a predictive indication of likely injury to a person or an occupant, especially a driver/operator of a vehicle, such as based on known structural characteristics of the vehicle and also the presence and type of safety equipment on the vehicle.

The transmitted alert may include information relating to the object and/or the vehicle owner/driver/operator. For example, the make, model and/or registration number, the name and address details of the owner/driver/operator, blood group, history of any previous accidents, health issues, disabilities, estimated number of occupants of a vehicle involved in the incident based upon seatbelt/seat reading by the device etc. Such information can be extremely useful to emergency services prior to arriving at the scene of the incident.

In the event that a vehicle suffers substantial, major or complete structural destruction, the device or system according to the present invention is arranged and configured to survive and function. For example, power supply can be onboard the device or system rather than provided by the vehicle. Thus, it is envisaged that the device or system can be self contained and independent of vehicle systems.

Ambulance/medical/paramedic staff may be able to pre-prepare pharmaceuticals and/or medical equipment prior to assisting an injured person. Operation of the device/system can also assist with indicating the number of vehicles involved if there are devices installed in each vehicle. This also assists paramedics / medical staff etc.

Rescue personnel may be able to commence or pre-prepare an action plan ahead of arriving at the incident. Medical centre staff may be able to make ready suitable blood supplies or pharmaceuticals ahead of an injured person arriving at an emergency treatment centre. The information may be used to provide estimation of severity of likely injuries (e.g. a "trauma score", such as a "Revised Trauma Score" (RTS) or "Emergency Trauma Score" (EMTRAS) - being tools for triage of multiple casualty incidents).

The device may be able to transmit an alert and/or information via various media, such as by sending packet data/packet radio communication, short range wireless/Bluetooth RTM, radio frequency (RF) including telephone (mobile phone) frequencies or satellite phone frequencies, internet or WiFi. An alert may be preloaded or determined from GPS current country data so as to modify utilised frequencies to those appropriate for a locality, region or country, both in terms of frequency allocation by country and optimal frequency for terrain (such as based on GPS and internal maps).
One or more embodiments of the present invention may utilise feedback (ping) from a reception unit to determine optimum transmission method/frequency. Such feedback allows increased efficiency of transmission thus improving likelihood of a successful transmission and decreased power usage.

The device and method may be able to utilise available resources of the object, such as a vehicle, to which it is associated to both enhance and sustain its functionality. For example, the device may have its own power supply augmented or replaced by a power supplied from the object, such as the battery supply from the vehicle or an electrical generator or solar device, such as a photovoltaic device.

One or more embodiments of the present invention may include an ability to adjust the method and means of signal transmission, power and frequency (in time) of transmission, which can act to reduce power usage and thus maximise length of transmission time.

The device may be an electronic device, able to operate fully independently of other devices or in combination with other devices, and with or without direct human activation or intervention, to assist the object and/or person(s) involved in the incident or affected by the incident. The device may utilise surrounding mechanisms and infrastructure or facilities, such as the nearest mobile phone cell mast to relay a transmitted alert.

In addition, the device may include at least one input and/or output interface to other electronic devices.

The device may include activation means actuated by the object to which device is attached. Autonomous activation of the device to send an alert may be based upon pre-defined triggering requirements, such as physical characteristics of the object including velocity, yaw, pitch, roll, heave, deceleration, acceleration, rate of change of acceleration or deceleration, or activation of a specific sensor .e.g immersion detection sensor, fire detection, external temperature or combinations of any two or more thereof.

The device may identify and preferably transmit geographic location i.e. absolute location, and/or relative location - relative to the last know position, which relative position may be verified by GPS and/or radio location services, including longitude, latitude and altitude. Relative position may be determined by predictive computation, such as the device determining an absolute position and utilising object parameters, such as speed, velocity, acceleration, deceleration, angular momentum, roll, pitch, heave or yaw to determine preferably where, at what inclination or orientation, the object is. This predictive information may be time based to determine when the object arrived at a particular position and/or orientation as well as where.

Detected or measured physical characteristics may include, but need not be limited to, immersion detection, fire/heat/smoke detection, external temperature (high or low temperature, such as freezing/extreme cold/wind chill or extreme heat, flame, radiant heat), acceleration, deceleration, rate of change of acceleration/deceleration, velocity, pitch, yaw, roll, heave, activation of other associated safety devices either detected by the device or provided through at least one input/output interface of the device. Estimated power remaining and/or power consumption may be detected and may be transmitted.

The device may transmit data or information relating to itself, such as a serial number, registration number, date and time activated, installation information, Identification details etc.

GPS and other radio-location services (e.g. transponders, mobile phone triangulation) may be used to transmit an alert and/or to identify where the device (and therefore the object) is.

Initial velocity and directions of movement of the object may also be partly based on these services. If such services become unavailable, the device may continually monitor its own position relative to at least one last known position, such as using a combination of compass, acceleration, pitch/yaw/roll and/or information provided by a person/object to which device is associated or attached. The device may be physically attached to a safety device e.g. a life jacket, recording device (such as a 'black box' device) or people/person.

It is to be understood that the present invention may be associated with a vehicle, such as a car, truck, marine vessel etc or with a person, such as worn personally or on clothing such as on a lifejacket, or associated with safety equipment, such as a black box recorder or flotation device.

Although information derived by the device may be used to calculate position, such information may also be also obtained via the input/output interface(s).

An alert may be encoded and transmitted as one or more data packets. Such data packets may be transmitted periodically by the device. Consequently, the device may include or be connected to a data packet creation means. The transmission if data packets rather than continuous transmission may be useful in prolonging battery life. Alternatively, or in combination with data packets, the alert may be transmitted as text and/or one or more images. The image(s) may be digital 'photograph' image(s) and/or digital pictograms representing a particular incident. For example, a crashed vehicle may be used to indicate a motor vehicle road traffic accident, a sinking boat may be used to indicate a boat has capsized or is taking on water.

Radio communication for transmitting the alert may include transmission over emergency frequencies and/or mobile phone if available. Localised direct audio transmission, such as an audible siren may be used.

A further aspect of the present invention provides a method of generating an automatic incident alert, the method including mounting an alert device to an object, the device arranged to transmit an alert to a remote location in the event of an incident occurring to the object, detecting at least one characteristic of the incident when an incident occurs, determining that the detected incident requires an alert to be transmitted, and transmitting the alert to the remote location based on the at least one characteristic of the incident.

The alert may include transmitting information relating to the incident location, time of the incident, characteristics of the incident including speed, angle, vector, roll, yaw, heave, pitch, acceleration, deceleration, rate of deceleration (jerk), position, force or overall area of any impact to the object. In addition or alternatively, the alert may include transmitting information relating to the object or the object owner/driver/operator and/or may include transmitting a vehicle make, vehicle model, vehicle registration number, name and contact details of the owner/driver/operator, blood group, history of any previous accidents, health issues or disabilities.

The object may be attached to a vehicle. Alternatively, the device may be attached to safety devices e.g. life jackets, recording devices, such as a black box, or may be attached to a person.

The alert may be transmitted via one or more of a radio frequency (RF), mobile phone frequencies, satellite phone frequencies, direct satellite communication, internet or WiFi.

Actuation of the device may be by one or more systems or components of the object, such as one or more vehicle subsystems.

Triggering of the alert or the nature of the alert may be determined by rate of deceleration of the object or a signal from a safety system of the object. The safety system may be an airbag system of a vehicle. Vehicle roll, pitch, heave and/or yaw over a certain threshold, and/or immersion in a liquid (such as water) may trigger activation of the device, as may extremes of temperature or change of temperature over a period of time (rate of change of temperature), such as a rate of change above a certain threshold.

Autonomous activation of the device to send an alert may be based upon pre-defined triggering requirements including physical characteristics of the object including velocity, yaw, pitch, roll, heave, deceleration, acceleration, rate of change of acceleration or deceleration, or combinations of any two or more thereof.

Relative position of then object may be verified by GPS and/or radio location services, including longitude, latitude and altitude. Relative position may be determined by predictive computation. Relative position may also be determined by using an absolute position and utilising speed, velocity, acceleration, deceleration, angular momentum, roll, pitch, heave or yaw of the vehicle prior to or during the incident to determine preferably where, at what inclination or orientation, the object is. The device may include smoke and/or hazmat detection means.

The alert may be transmitted periodically as a data packet or transmitted as text or at least one image.

Triggering the device or system to activate or send an alert may be by or include a sensor of the attached object or manual activation, such as a manual switch or release, pull chord or push button.

The device of the present invention may include data modification means and methodology based upon the detected available resources. The device may include detection and utilisation of sensor output from or related to the object to which the device is attached or associated with.

Charging of the device for power may be by an external source using hard wired or wireless means. Energy harvesting may also or instead be used to power the device. Kinetic, solar or thermal energy may be harnessed, for example, to generate electricity.

Recording of several hours of sensor data may be incorporated into the device, for example, 24hr sensing recording.

Remote activation of the device, such as by authorities like the police, are envisaged, such as if the device is stolen or misplaced. Activation or pinging of the device to find its location may be by smartphone or computer device.

### BRIEF DESCRIPTION OF THE DRAWINGS

**Figure 1** shows a general schematic of components and application of the device according to an embodiment of the present invention.
**Figures 2a****,** **2b** **and** **3** show flow charts of operation of the device incorporated into a vehicle and subroutines of the device in use.
**Figures 4A to 4C** show side, end and top view (main casing top view) of a housing for the components according to an embodiment of the present invention.
**Figure 5** shows a side view of a housing for components of an embodiment of the present invention, including external insulation on the casing of the housing.
**Figures 6** **and** **7** relate to an embodiment of the present invention for personal safety or incident alert.

### DESCRIPTION OF PREFERRED EMBODIMENTS

Embodiments of the present invention will hereinafter be described with reference to the accompanying figures.

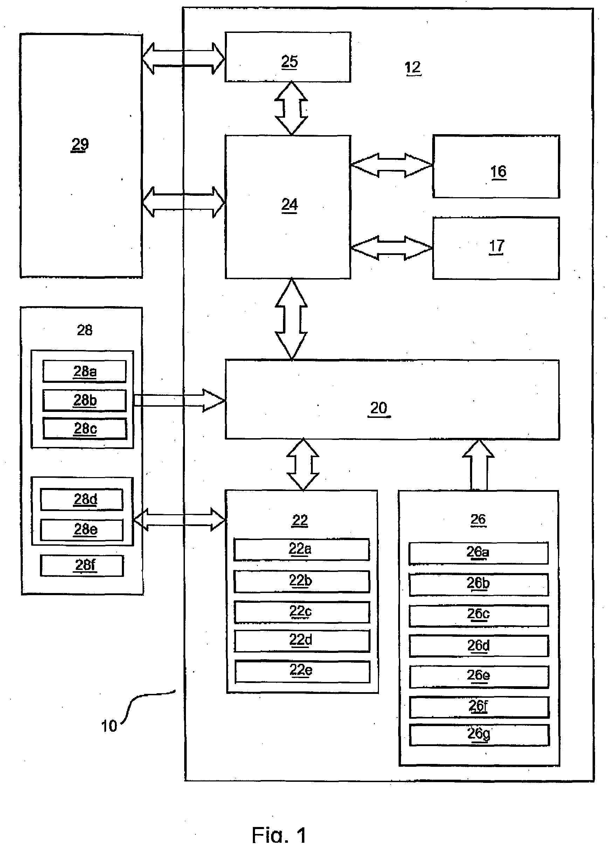

The device 10 shown in figure 1 is mountable within or to an object, such as a person, a personal safety device, a vehicle or vessel or safety device associated with the same.

In the following embodiments the present invention will be described and defined in relation to a vehicle. However, it is to be understood that the device may be mounted to other types of mobile objects, such as a person, marine vessel or aircraft.

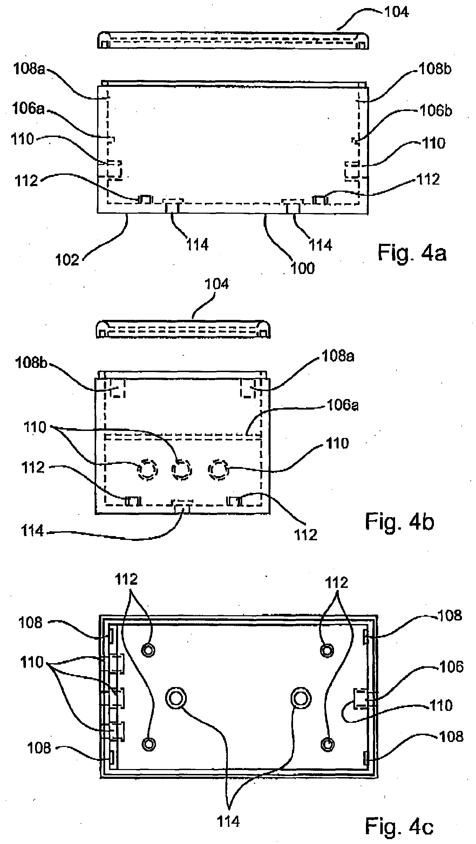

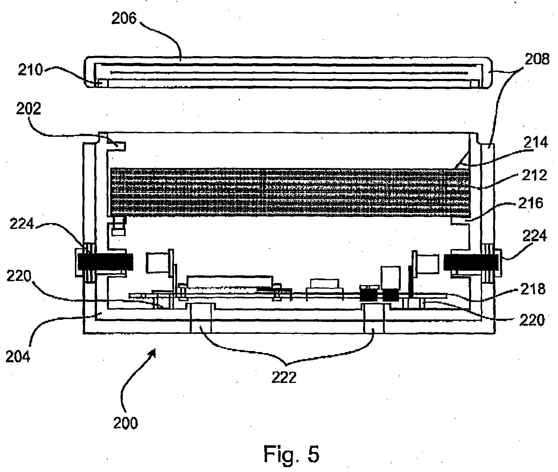

The device 10 is contained within a heavily reinforced impact-cushioned container 100 such as shown in Figures 4A-C and 5, with waterproof inputs 110 for vehicle physical and spatial/temporal data, antenna and power. The device includes an in built rechargeable power supply 212 sealed against ingress of water or other liquids. The electronics and circuitry 218 are also sealed against water damage. The container 100 is constructed to be impact and fire resistant.

The electronics within the device include a central processor and timer 20, a wireless communications unit 22 (such as a radio frequency transmitter/receiver), on-board power supply 16, power management/regulator unit 24, a sensor unit 26 and an external inputs unit 28. A further transceiver 23 (not shown) can be provided. For example, to be used for "pinging" i.e. the device checking for availability of a communication network to connect to, the type of network and strength of signal, and information protocols, such as language and information format. Likewise, the network could "ping" to seek present of the devices within a location or area. One or more sensors of the sensor unit 26 is/are connected to the electronics as part of the device.

The onboard power management/regulator 24 is connected to an external power supply 29, such as a battery/electrical system of a vehicle to which the device is connected, and to the onboard power supply (such as a rechargeable battery). It may also be connected to other power sources, including a wireless charging unit 25 or an energy harvesting unit 17.

The power management/regulator unit 24 monitors power supply from the external source and can use this source to charge the on-board battery 16, to selectively power the device, or can detect that no or reduced external power supply is available and can switch to the on-board power supply powering the device. The device may include a combination of one or more of the following sensors; a GPS, a compass, one or more accelerometers, one or more roll sensors, an altimeter, and a timer, depending on the application of the device.

External inputs/outputs 28 in this embodiment are provided from one or more of a speedometer 28a, GPS 28b, a safety device (such as a vehicle airbag or a personal safety device such as a floatation device/life jacket) 28c, to the CPU and Timer Unit 20.

Inputs/outputs can also be provided to/from the wireless communication unit 22, such as by antenna 28d and/or mobile phone 28e. These inputs/outputs communicate with one or more of an RF transceiver unit 22a, a (Bluetooth™) short range wireless system 22c, a WiFi communication system 22d, satellite communications unit 22e, and/or GSM/GPRS communications unit 22b. The wireless communication unit 22 communicates with the CPU and Timer Unit 20.

Audiovisual inputs/outputs, 28f, where available, also interface via the wireless communication unit.

The internal sensor unit 26 communicates with the CPU and Timer Unit 20. The internal sensor unit provides sensed values/signals relating to one or more parameters, such as a location (GPS) sensor 26a, a magnetic field detector (magnetometer) 26b, an accelerometer 26c, a tilt sensor (eg roll sensor) 26d, temperature sensor 26e, an immersion sensor 26f and a gyroscope 26g.

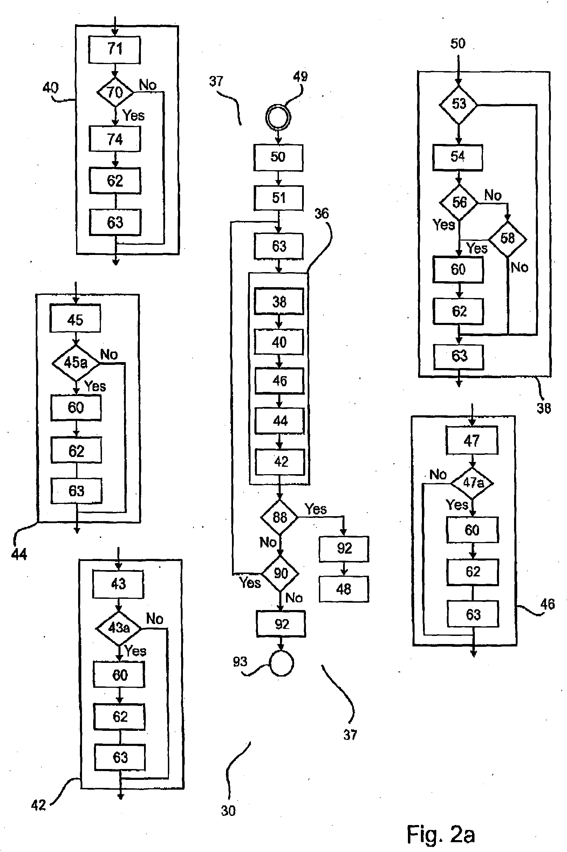

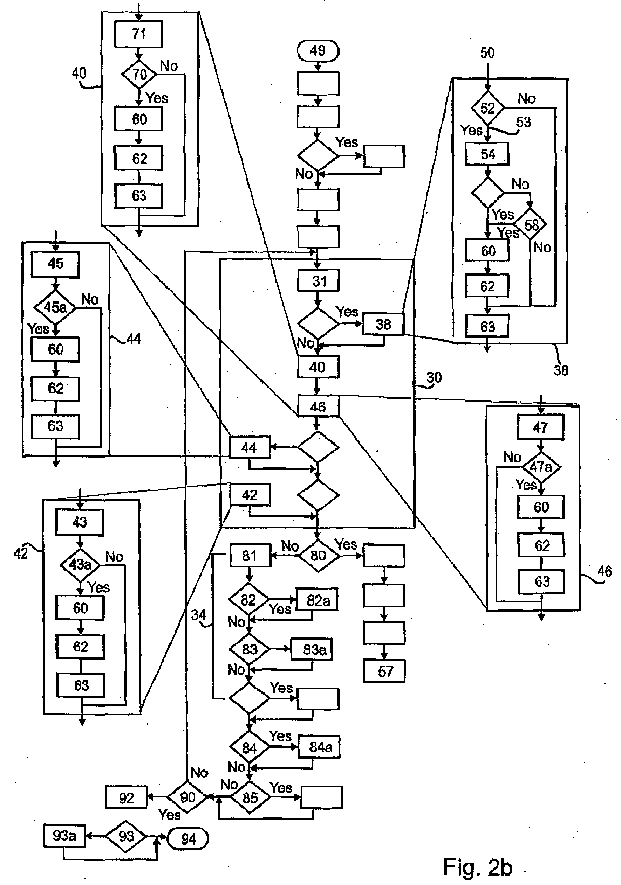

Functionality and further features of the device, its operation and systems will hereinafter be described with reference to figures 1, 2a and 2b and 3.

Functionally, the core two units of the device are:
i. Speed, velocity, location, immersion, temperature, acceleration, deceleration processor 26; and
ii. Device triggering monitor 30

The power monitoring unit 24 operates concurrently with the speed/velocity/location processor 28 and the device triggering monitor 30 to ensure correct power requirements. A fourth unit, the receiving unit 35 also runs concurrently with the power monitoring unit, speed/velocity/location processor and the device triggering monitor.

All four of the abovementioned units 24,28,30 and 35 operate in parallel, such as from the time the vehicle device is turned on, either manually, automatically until it ignition is switched on 49 until the ignition is switched off 94 (if no device activation has occurred in the interim).

A fifth unit, the transmission/encoding unit 34, is only activated if the device is triggered by an incident or by remote command.

The device is initialised when the vehicle ignition is switched on 49. Initialisation may occur in other ways for other vehicles, craft or vessels. Initialisation activates the speed/velocity/location processor, device triggering monitor and the power monitoring unit.

The device includes a polling unit 30, and a port monitor and timer 37. The device commences port monitoring via the port monitor once initialised.

The polling unit houses:
a device impact unit 38 and
a device roll (orientation) unit 40.
a device immersion unit 42.
a device fire/temperature/cold/heat detection unit 44.
a device acceleration / deceleration detection unit 46.

The device impact unit 38 reacts to a signal 50, such as from a person or vehicle, indicating that a safety device, such as a personal safety device (e.g. life jacket) or a vehicle impact safety device (e.g. an airbag) has been or will be activated 53. In one example, the vehicle's airbag computer and/or one or more accelerometers on the vehicle may be monitored.

The device roll unit or device orientation unit 40, immersion detector unit 42, fire/heat/cold detector (temperature and/or smoke detector) unit 44, and acceleration/deceleration detector unit 46, can be activated regardless of deployment of the personal or vehicle safety device or other impact/incident activated safety device. For example, the device may detect that a vehicle has rolled beyond a threshold degree of rotation and/or has rolled beyond a threshold rate of rotation or a person has decelerated beyond an acceptable amount. Immersion detection may also be provided whereby one or more detectors detects immersion of the person or vehicle in a liquid, such as water e.g. a river, lake, canal or the sea, and activates the device to send an alert. Fire/heat/smoke/noxious gas/chemical detection may also be provided, whereby one or more detectors is/are provided and in the event of fire, extreme heat, smoke and/or noxious gas that may threaten injury, death or incapacitation of a person, or damage to a vehicle, an alert is sent out by the device.

If the device impact unit 38, is activated, incident data, such as from a vehicle's computer, including deceleration force/velocity and/or nature of impact is then determined 54. If a side impact to the vehicle is detected to occur at a speed greater than a threshold speed e.g. 20km/h 56, or a front/rear impact deceleration above a threshold e.g. of >50km/h 58, is detected, then an impact indication is triggered 60. An incident occurred timer is started 62. All data from sensors is added to a data archive 63. This data archive may be a "black box' archive. Regardless of the trigger flag, impact data is sent to the device's central processor 64 and the device roll unit is activated.

The device roll unit 40 is either activated by the device impact unit 38 following activation of a personal or vehicle safety device, such as an airbag, or by the polling unit if the airbag is not activated. The unit obtains roll data 71. If vehicle roll attitude is determined to be >90 degrees side to side or if vehicle pitch 70 is determined to be 90 degrees front to rear, then a trigger flag is set if it has not already been done so 60 and an incident timer 62 is started. The roll/pitch data is sent to the central processor if the trigger flag has been sent by any unit. If any of the impact unit 38, roll unit 40, immersion detector unit 42, temperature (fire/cold) detector unit 44 or acceleration/deceleration detector unit 46 indicate an incident has occurred, the device sends an alert 57.

For the immersion unit 42, data from the sensor is obtained 43 and if the sensor has been activated 43a then a trigger flag is sent 60, the incident timer is started (if not already activated) 62 and data from all sensors added to the data archive 63.

For the fire unit 44, data from the sensor is obtained 45 and if the sensor has been activated 45a then a trigger flag is sent 60, the incident timer is started (if not already activated) 62 and data from all sensors added to the data archive 63.

The acceleration/deceleration unit 46, gets data from sensors about acceleration and speed 47. It determines if acceleration/deceleration is above a threshold e.g. greater than 15 m/sec, 47a. If it is, then a trigger flag is sent 60 and the incident timer is started (if not already activated) 62, and data from all sensors is added to the data archive 63.

If the trigger flag has not been sent after all inputs have been evaluated 80
then the device checks the receiving unit for incoming data messages 81. If remote immobilisation request data message 82 has been received then remote vehicle immobilization is activated 82a. If not then if stolen tracking request 83has been received then tracking is activated 83a.

If stolen tracking request has not been received then maintenance routines are initiated. The first routine determines whether hazardous material information needs to be updated 84. Then the device determines whether ICE (in case of emergency) data needs to be updated 85.

Following maintenance routines, the device checks if the ignition is on 90. If it is off then the port monitor and timer stops 92 , the device checks for firmware updates 93 and updates firmware if required 93a, then the unit shuts down 94. If the ignition is on the device continues the port monitor and timer and resumes monitoring all units for trigger data 30. If a trigger has been sent then the port monitor timer is stopped 92 and an alert is transmitted 57.

The speed/velocity/location processor can be constantly operating. As part of gathering of all sensor data 31, current position is determined 316.

This processor determines firstly if GPS is available 300.

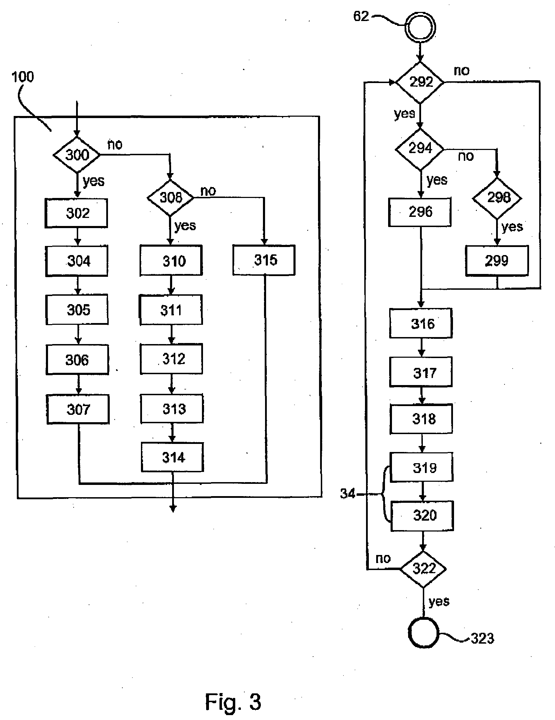

As shown in figure 3, GPS coordinates are determined. If GPS coordinates are available 300, GPS position is obtained 302 and time of GPS acquisition is determined 304. New position is set to LITERAL 305 i.e. present position. The current position is stored as the last known position 306.

The step of Storing current position data 307 can be omitted if required.

If GPS is not available the device determines if previous GPS data is available, 308. If a stored position is available, time of location estimation is reset 310, and new position flag set to calculated 312. The new position is calculated 314 from last known position and data from one or more data inputs.

If GPS is not available and no data is stored, data is set to NULL and an error flag is generated 315.

When transmitting a message the device may include position, estimated or actual position flag, I.C.E. data, sensor data (including heading, speed, acceleration/deceleration, temperature, immersion), hazardous chemical information, remote tracking status and stolen vehicle tracking status.

In deactivating the device, polling and location determination ceases when external power is turned off only if activation of device due to an impact has not occurred or if remote tracking has not been activated. If the device has been activated due to an impact, other incident or remotely, then turning off the vehicle ignition will not deactivate the device. The device's own battery power will maintain operation of the device. The device may parasitically utilise battery power from the vehicle or other sources as a back up power supply.

The device is activated when triggered. If an incident occurs, such as a vehicle impact, the incident timer is activated 62. The device then proceeds to acquire all sensor data including location and speed or velocity of the vehicle is obtained from speed/velocity/location calculator 316. The device then constructs the message and transmits it 57. If no command is sent to switch of the unit then this process repeats. The device may be deactivated manually or remotely.

The device constructs a data packet if a data packet is to be transmitted. Alternatively or in addition, a text message is assembled or selected from a library of predetermined messages. The device also makes an assessment of available transmission and power resources for the device, and may scan to determine what alert data or text or audiovisual receiver infrastructure or systems is/are available or within range. The alert is then transmitted.

The transmitted alert may include a digitally encoded message. The message may include one or more of a unique device identification (device ID), time elapsed since triggering, vehicle speed at impact, vehicle orientation and/or change of orientation over time, such as roll or pitch, vehicle altitude, location - current with either an estimated location (i.e. calculated or transponder) or GPS flag, last known GPS position with elapsed time since acquisition, bearings based on the last two GPS coordinates or previous GPS coordinates and ESTIMATE, and/or on-board battery life estimation (time or rate of charge reduction).

Shown in figures 4A to 4C, a housing 100 for the electronic components of the device provides a waterproof, high strength casing consisting of a lower body 102 and lid 104. The casing is constructed to withstand impact, extremes of heat/cold and corrosive effects or ingress of water and strong acid/alkali solutions etc. Within the casing there is provided support ledges 106a,106b for the onboard battery (not shown), with clamps 108a,108b to retain the battery within the casing. A number of access ports for electrical connections at each end of the casing. These are provided with waterproof seals. Fixing points 112 are provided to secure circuits and components within the casing. Attachment points 114 are also provided for securing the casing to an object, such as a vehicle. Fastening means, such as tamperproof screws or bolts can be used along with waterproof seals. The casing may be constructed of metal and/or a synthetic material such as a high strength plastic e.g. polycarbonate. Fastening means (not shown) can be used to secure the lid to the casing body, which can include the provision of a seal, such as a waterproof seal (eg a silicon rubber or neoprene compression seal) between the lid and body.

Figure 5 shows a housing 200 having a casing 202 with a main body portion 204 and a removable lid 206. The body and lid has a 'ruggedised' outer coating 208 of a tough protective material, such as polycarbonate or other tough plastics material(s), to prevent damage to the body or lid. This coating may also provide thermal insulation from extremes of heat and cold, and may also provide waterproofing. A seal 210, such as a waterproof seal, may be provided in the underside of the lid and/or adjacent an upper periphery of the body, to hermetically seal the casing against ingress of water or other liquids harmful to the electronics within. A removable battery 212 is retained within the body by a battery clip 214. A ledge 216 supports each end of the battery. A circuit board 218 carrying electronic components of the device, such as the CPU and Timer Unit 20, the Internal Sensor Unit 26 and the wireless communications unit 22 can be mounted on this circuit board. The circuit board 218 is retained in place at the bottom of and within the body by retaining means 220, such as clips or screws. Fastening apertures 222 are provided for attaching the device to an object, such as a vehicle. Waterproof access points 224 are provided to allow communications and or power cables to enter/exit the housing but prevent ingress of contaminants, such as moisture and dirt, or in the event of immersion, water or other fluid.

Further embodiments of the present invention will hereinafter be described. The following description refers to a personal emergency transmitter.

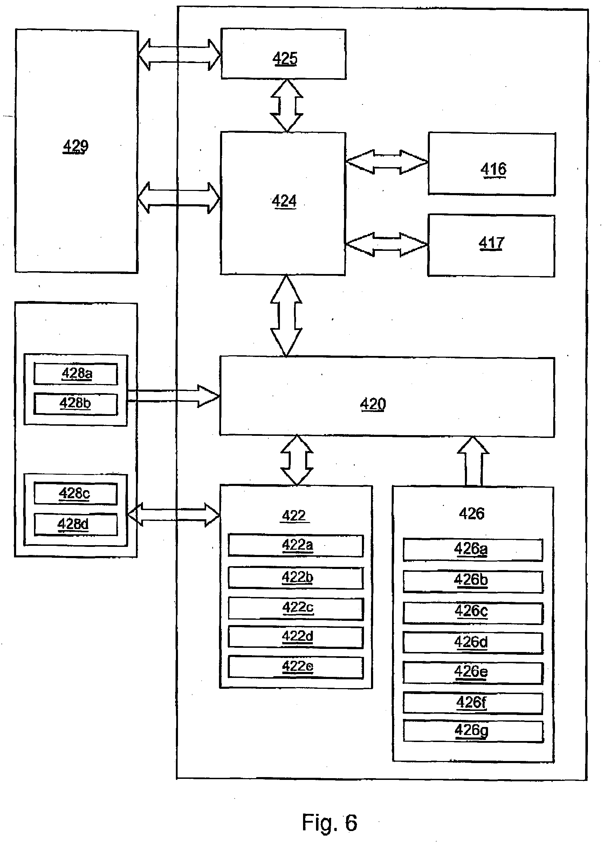

The device 10 shown in figure 6 is mountable within or to an object, such as a person, a personal safety device, a vehicle or vessel or safety device associated with the same.

In the following embodiment the present invention will be described and defined in relation to a device to be carried or worn by a person or an object that they are carrying or wearing. However, it is to be understood that the device may be mounted to other types of mobile objects, such as (but not limited to) vehicles, marine vessels or aircraft.

The device 10 is contained within a heavily reinforced impact-cushioned and resistant container 100 such as shown in Figures 4A-C and 5, with waterproof inputs 110 for mobile phone integration, GPS/spatial/temporal data, antenna and power. The device includes an in built rechargeable power supply 212 sealed against ingress of water or other liquids. The electronics and circuitry 218 are also sealed against water damage. The container 100 is constructed to be impact and fire resistant.

The electronics within the device include a central processor and timer 420, a wireless communications unit 422 (including one or more of cellular network, satellite, radio frequency, WiFi (Bluetooth RTM) transmitter/receiver), onboard power supply 416, power management/regulator unit 424, optional wireless charging unit 425, optional energy harvesting unit 417 a sensor unit 426, and an optional external input/output unit 428. Further communication transceivers for additional functionality 423 (not shown) can be provided. For example, to be used for "pinging" i.e. the device checking for availability of a communication network to connect to, the type of network and strength of signal, and information protocols, such as language and information format. Likewise, the network could "ping" to seek present of the devices within a location or area.

One or more sensors of the sensor unit 426 is/are connected to the electronics as part of the device. The on-board power management/regulator may be connected to an external power supply 429, such as an external battery pack, to recharging devices (including mains, solar or the optional wireless charging unit), to the optional energy harvesting unit 417, and to the onboard power supply (such as a rechargeable battery).

The power management/regulator unit monitors power supply from the external source (via wires or wireless) and the optional energy harvesting unit and can use these sources to charge the onboard battery and/or to selectively power the device. It may also detect that no or reduced external power is available and can switch to the onboard power supply powering the device. The device may include a combination of one or more of the following sensors; a GPS, a compass, one or more accelerometers, one or more roll sensors, an altimeter, an immersion detector, a light sensor and a timer, depending on the application of the device.

External inputs/outputs 428 in this embodiment are provided from one or more of a pedometer 428a, GPS 428b, to the CPU and Timer Unit 420. These may be wired or wireless (e.g. using Bluetooth via the communications unit).

Inputs/outputs can also be provided to/from the wireless communication unit 422, such as by antenna 428c and/or mobile phone 428d. These inputs/outputs communicate with one or more of an RF transceiver unit 422b, a (Bluetooth™) short range wireless system 422c, a WiFi communication system 422d, satellite communications unit 422e, and/or GSM/GPRS communications unit 422a. The wireless communication unit 422 communicates with the CPU and timer unit 420.

The internal sensor unit 426 communicates with the CPU and Timer Unit 420. The internal sensor unit provides sensed values/signals relating to one or more parameters, such as a location (GPS) sensor 426a, a magnetic field detector (magnetometer) 426b, an accelerometer 426c, a tilt sensor (eg roll sensor) 426d, temperature sensor 426e, immersion sensor 426f and gyroscope 426g.

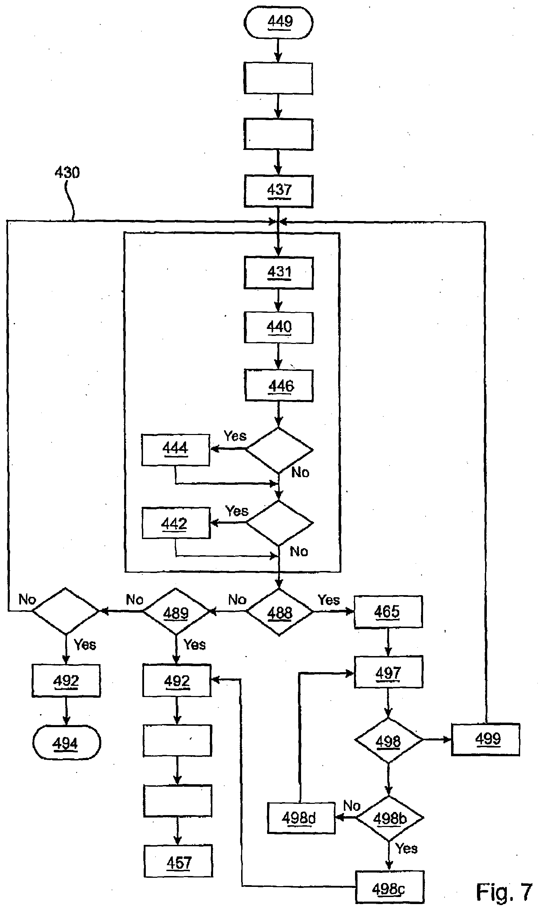

Functionality and further features of the device, its operation and systems will hereinafter be described with reference to figures 3, 6 and 7.

Functionally, the core two units of the device are:
i. Speed, velocity, location, immersion, temperature, acceleration, deceleration processor 426; and
ii. Device triggering monitor 430

The power monitoring unit 424 operates concurrently with the speed/velocity/location processor 431 and the device triggering monitor 430 to ensure correct power requirements.

All three of the abovementioned units 424,431,430 operate in parallel, such as from the time the device is turned on, either manually, automatically until it is switched off 494 (if no device activation has occurred in the interim).

A fourth unit, the transceiving unit 422 is activated if the device is triggered by an incident or by manual command.

The device is initialised when it is manually switched on 449. Initialisation may occur in other ways for other implementations. Initialisation activates the speed/velocity/location processor, device triggering monitor, and the power monitoring unit.

The device includes a polling unit 430, and a port monitor and timer 437. The device commences port monitoring via the port monitor once initialised.

The polling unit houses:
a device roll (orientation) unit 440.
a device immersion unit 442.
a device fire/temperature/cold/heat detection unit 444.
a device acceleration / deceleration detection unit 446.

The device roll unit or device orientation unit 440, immersion detector unit 442, fire/heat/cold detector (temperature and/or smoke detector) unit 444, and acceleration/deceleration detector unit 446, can be activated regardless of the activation status of other sensors. For example, the device may initially detect that a person has decelerated beyond an acceptable amount and then detect immersion, in addition. Immersion detection may be provided whereby one or more detectors detects immersion of the person in a liquid, such as water e.g. a river, lake, canal or the sea, and activates the device to send an alert. Fire/heat/smoke/noxious gas detection may also be provided, whereby one or more detectors is/are provided and in the event of fire, extreme heat, smoke and/or noxious gas that may threaten injury, death or incapacitation of a person, an alert is sent out by the device..

The device roll unit 440 is activated by internal/external sensors. If device roll attitude is determined to be >720 degrees side to side or if device pitch is determined to be 90 degrees front to rear, then a trigger flag is sent if it has not already been done so. If the roll flag is triggered a trigger flag is set and the incident timer disarm timer is started (if not already activated) 465. The roll/pitch data is sent to the central processor if any unit has sent the trigger flag. If any of the roll unit 440, immersion detector unit 442, temperature (fire/cold) detector unit 444 or acceleration/deceleration detector unit 446 indicates an incident has occurred, the incident timer disarm timer is started (if not already activated) 465.

For the immersion unit 442, if the sensor has been activated, then a trigger flag is sent 460, and the incident timer disarm timer is started (if not already activated) 465

For the thermocouple unit 444, if the sensor is activated, then a trigger flag is sent 460 and the incident timer disarm timer is started (if not already activated) 465

The acceleration/deceleration unit 446, gets data from sensors about acceleration and speed. It determines if acceleration/deceleration is above a threshold e.g. greater than 5 m/sec If it is, then a trigger flag is set 460 and the incident timer disarm timer is started (if not already activated) 465

If the trigger flag has not been sent after all inputs have been evaluated 488 then the device determines if a manual alert has been activated 489. If so then an alert message is sent 457. In not then the device determines whether the device has been switched off. If so the port monitor and timer stops 92 and the device powers down 494. If it is on the device continues the port monitor and timer and resumes monitoring all units for trigger data 430. If a trigger has been sent then the port monitor timer is stopped 492.

If a trigger has been set and the disarm timer started an audible alarm 497 is activated. If the trigger reset button is pressed 98 then the disarm timer is stopped 499, the trigger flag is cleared and the device continues the port monitor and timer and resumes monitoring all units for trigger data 430. If the disarm timer has expired 498b then the disarm timer is stopped 498c, the port monitor timer is stopped 492 and an alert message is sent 457. If the disarm timer has not expired then there is a 1 second pause 498d and the deactivation process 499h is repeated.

The speed/velocity/location processor can be constantly operating. As part of gathering of all sensor data 431, current position is determined 316.

This processor determines firstly if GPS is available 300.

As shown in figure 3, GPS coordinates are determined. If GPS coordinates are available 300, GPS position is obtained 302 and time of GPS acquisition is determined 304. New position is set to LITERAL 305 i.e. present position. The current position is stored as the last known position 306.

If GPS is not available the device determines if previous GPS data is available, 308. If a stored position is available, time of location estimation is reset 310, and new position flag set to calculated 312. The new position is calculated 314 from last known position and data from one or more data inputs.

If GPS is not available and no data is stored, data is set to NULL and an error flag is generated 315.

When transmitting a message the device may include position, estimated or actual position flag, I.C.E. data, sensor data (including heading, speed, acceleration/deceleration, temperature, immersion), hazardous chemical information, remote tracking status and stolen vehicle tracking status.

In deactivating the device, polling and location determination ceases when external power is turned off only if activation of device due to sudden deceleration (impact) has not occurred. If a sudden deceleration (impact) has occurred, then the device will only switch off if the reset alarm button is activated. The device's own battery power will maintain operation of the device. The device may parasitically utilise battery power from an external power source as a back up power supply/external battery.

The device is activated when triggered. If an incident occurs, such as a vehicle impact, the incident timer is activated 62. The device then proceeds to acquire all sensor data including location and speed or velocity of the vehicle is obtained from speed/velocity/location calculator 316. The device then constructs the message and transmits it 57. If no command is sent to switch of the unit then this process repeats. The device may be deactivated manually or remotely.

The device constructs a data packet if a data packet is to be transmitted. Alternatively or in addition, a text message is assembled or selected from a library of predetermined messages. The device also makes an assessment of available transmission and power resources for the device, and may scan to determine what alert data or text or audiovisual receiver infrastructure or systems is/are available or within range. The alert is then transmitted.

The transmitted alert may include a digitally encoded message. The message may include one or more of a unique device identification (device ID), time elapsed since triggering, roll or pitch, altitude, location - current with either an estimated location (i.e. calculated or transponder) or GPS flag, last known GPS position with elapsed time since acquisition, bearings based on the last two GPS coordinates or previous GPS coordinates and ESTIMATE, and/or on-board battery life estimation (time or rate of charge reduction).

Shown in figures 4A to 4C, a housing 100 for the electronic components of the device provides a waterproof, high strength casing consisting of a lower body 102 and lid 104. The casing is constructed to withstand -, extremes of heat/cold and corrosive effects or ingress of water and strong acid/alkali solutions etc. Within the casing there is provided support ledges 106a,106b for the on-board battery (not shown), with clamps 108a,108b to retain the battery within the casing. A number of access ports for electrical connections at each end of the casing. These are provided with waterproof seals. Fixing points 112 are provided to secure circuits and components within the casing. Attachment points 114 are also provided for securing the casing to an object, such as a safety harness. Fastening means, such as tamperproof screws or bolts can be used along with waterproof seals. The casing may be constructed of metal and/or a synthetic material such as a high strength plastic e.g. polycarbonate. Fastening means (not shown) can be used to secure the lid to the casing body, which can include the provision of a seal, such as a waterproof seal (eg a silicon rubber or neoprene compression seal) between the lid and body.

Figure 5 shows a housing 200 having a casing 202 with a main body portion 204 and a removable lid 206. The body and lid has a 'ruggedised' outer coating 208 of a tough protective material, such as polycarbonate or other tough plastics material(s), to prevent damage to the body or lid. This coating may also provide thermal insulation from extremes of heat and cold, and may also provide waterproofing. A seal 210, such as a waterproof seal, may be provided in the underside of the lid and/or adjacent an upper periphery of the body, to hermetically seal the casing against ingress of water or other liquids harmful to the electronics within. A removable battery 212 is retained within the body by a battery clip 214. A ledge 216 supports each end of the battery. A circuit board 218 carrying electronic components of the device, such as the CPU and Timer Unit 20, the Internal Sensor Unit 26 and the wireless communications unit 22 can be mounted on this circuit board. The circuit board 218 is retained in place at the bottom of and within the body by retaining means 220, such as clips or screws. Fastening apertures 222 are provided for attaching the device to an object, such as a safety harness. Waterproof access points 224 are provided to allow communications and or power cables to enter/exit the housing but prevent ingress of contaminants, such as moisture and dirt, or in the event of immersion, water or other fluid.

The device can be capable, such as by a light sensor, to detect night-fall and optionally activate an optional high intensity light strobe which may be used to attract attention at night time/dusk. This device may be activated by remote command.

The device, if on a person, may also be activated by that individual. Alternatively, if a trigger is activated and not deactivated by the wearer/bearer/individual within a required or predefined period of time (e.g. 5min) then the alert process begins. The bearer can be alerted to the initial trigger by an audible alarm and optional vibration.

The device can include means to detect hazardous material, such as chemical and/or radioactive material.

The device may be configured to contain information pertaining to materials carried on board, other details of the object to which the device is attached, and/or details about the owner/operator of the vehicle. This information may then be incorporated in to the transmitted data along with the alert.

The device is able to alter transmitted data and the method of transmission based upon reception of acknowledgment command.

The device may be notified by an external source (local or distant) that the object to which it is attached is to be tracked and send back regular updates on position and status.

The device may obtain power wirelessly or through energy harvesting methods and mechanisms, such as kinetic and thermal gradient technologies.

The device may transmit alert information to a local or distant network

The device is able to adapt its data collection, compilation and transmission according to the optional units attached and the sensor data available.

In this specification, the verb "comprise" has its normal dictionary meaning, to denote non-exclusive inclusion. That is, use of the word "comprise" (or any of its derivatives) to include one feature or more, does not exclude the possibility of also including further features. The word "preferable" (or any of its derivatives) indicates one feature or more that is preferred but not essential.

The reader's attention is directed to all and any priority documents identified in connection with this application and to all and any papers and documents which are filed concurrently with or previous to this specification in connection with this application and which are open to public inspection with this specification, and the contents of all such papers and documents are incorporated herein by reference.

All or any of the features disclosed in this specification (including any accompanying claims, abstract and drawings), and/or all or any of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An independent and automatic alert device, the device arranged to transmit an alert to a remote location in the event of an incident occurring relating to an object associated with the device, the device including incident detection means to detect at least one characteristic of the incident, determination means to identify whether a detected incident requires an alert to be transmitted, and transmission means to transmit an alert to the remote location based on the at least one characteristic of the incident.

2. A device according to claim 1, wherein the alert identifies that an incident has occurred to the object or includes information from one or more of location of the incident in space and time, characteristics of the incident including speed, angle, vector, roll, yaw, heave and pitch, acceleration, deceleration, rate of deceleration (jerk), position, force or overall area of any impact to the object, presence of one or more chemicals, presence of one or more radioactive materials or radiation.

3. A device according to claim 1 or 2, wherein the transmitted alert includes information relating to the object.

4. A device according to claim 3, wherein the transmitted information relates to one or more of a person, a vehicle, a vehicle make, vehicle model or vehicle registration number, the name or address details of a user of the vehicle or other person involved in the incident, user blood group, history of any previous accidents, health issues or disabilities.

5. A device according to any one of the previous claims, including the transmissions means configured to transmit the alert via one or more of radio frequency (RF), telephone, mobile phone frequencies, satellite phone frequencies, internet, short range wireless communication or WiFi.

6. A device according to any one of the previous claims, the device integrated with one or more systems of a vehicle to which it is mounted, the device arranged to utilise power or communication systems of the vehicle.

7. A device according to any one of the preceding claims, including at least one input or output interface to other electronic devices.

8. A device according to any one of the preceding claims, including activation means actuated by the object to which device is mounted.

9. A device according to any one of the preceding claims, the device configured to activate autonomously to send an alert triggered by physical characteristics of the object.

10. A device according to claim 9, the device including velocity, yaw, pitch, roll, heave, deceleration, acceleration, rate of change of acceleration or deceleration, immersion or temperature, radiation or presence of radioactive material, presence of one or more chemicals, detection means, or combinations of any two or more such detection means.

11. A device according to any one of the preceding claims, including location identification means, the device configured to transmit the object's location.

12. A device according to claim 11, wherein the location identification means determines absolute location or relative location.

13. A device according to any one of the preceding claims, including relative position or orientation identification means configured to determine absolute position and utilising object parameters, such as speed, velocity, acceleration, deceleration, angular momentum, roll, pitch, heave or yaw.

14. A device according to any one of the preceding claims, wherein the processor encodes alert data as at least one data packet and the alert is transmitted by the transmission means as the data packet.

15. A device according to any one of the preceding claims, wherein the object is a motor vehicle, an aircraft or a marine vessel.

16. A device according to any one of claims 1 to 14, wherein the object includes a person.
